# EUROPÄISCHE PATENTSCHRIFT

(11) **EP 4 129 044 B1**
(45) Veröffentlichungstag und Bekanntmachung des Hinweises auf die Patenterteilung: **24.12.2025**
(21) Anmeldenummer: 22168281.8
(22) Anmeldetag: 14.04.2022
(51) Int. Cl.: A01F 12/40, A01D 41/12

(54) **GUTVERTEILEINRICHTUNG**
MATERIAL DISTRIBUTION DEVICE
DISPOSITIF DE DISTRIBUTION DE MATERIAUX

(30) Priorität: 05.08.2021 DE 102021120365
(43) Veröffentlichungstag der Anmeldung: 08.02.2023
(73) Patentinhaber: CLAAS Selbstfahrende Erntemaschinen GmbH, 33428 Harsewinkel (DE)
(72) Erfinder: ELPMANN, Manuel, 33154 Salzkotten (DE)
(74) Vertreter: CLAAS Gruppe

(56) Entgegenhaltungen:
- EP-A1- 0 685 151
- EP-A1- 0 993 764
- EP-A1- 2 225 929
- WO-A1-2021/099633
- DE-A1- 3 838 936

## Beschreibung

Die Erfindung betrifft eine Gutverteileinrichtung für Mähdrescher mit zumindest einer innenseitig mit Gutleitelementen bestückten Auswurfhaube nach dem Oberbegriff des Anspruchs 1.

Derartige Auswurfhauben sind aus dem Stand der Technik hinlänglich bekannt. Aus der DE 100 64 356 ist eine Gutverteileinrichtung bekannt geworden, bei der alle Gutleitelemente einer rechts- oder linksseitigen Gruppe von Gutleitelementen mit einer Führungsschiene und einem Koppelsteg in der Weise verbunden sind, dass eine Positionsänderung der Führungsschiene zu einem allmählichen Verschließen des mittlerten Gutdurchtrittsbereichs der Gutverteileinrichtung führt. Dies hat den Effekt, dass die Gutverteileinrichtung schrittweise die Förderung von Erntegut im mittleren Bereich gewollt einstellt und der aus der Gutverteileinrichtung austreten Gutstrang nur noch seitlich abgegeben wird. Eine derartige Ausgestaltung ist für die Gutverteilung über eine große Arbeitsbreite ungeeignet, da eine große seitliche Verteilwirkung zulasten einer Verteilung im mittleren Bereich der Gutverteileinrichtung geht.

Demgegenüber offenbart die 102 09 722 eine Gutverteileinrichtung bei der alle Gutleitelemente einer rechts- oder linksseitigen Gruppe von Gutleitelementen mit einer Führungsschiene in der Weise verbunden sind, dass alle Gutleitelemente eine annähern konzentrische Krümmung aufweisen. Nachteilig ist bei einer derartigen Ausgestaltung, dass die Austragrichtung des aus der Verteileinrichtung austretenden Gutstrangs nicht feinfühlig über die Arbeitsbreite der landwirtschaftlichen Arbeitsmaschine einstellbar ist.

Es ist deshalb Aufgabe der Erfindung die beschriebenen Nachteile des Standes der Technik zu vermeiden und insbesondere eine Gutverteileinrichtung zu schaffen, die die Verteilung des aus der Gutverteileinrichtung austretenden Gutstranges über die Arbeitsbreite der landwirtschaftlichen Arbeitsmaschine feinfühliger steuern kann.

Diese Aufgabe wird erfindungsgemäß durch die kennzeichnenden Merkmale des Anspruchs 1 gelöst.

Indem die Gutverteileinrichtung für Mähdrescher mit zumindest einer innenseitig mit Gutleitelementen bestückten Auswurfhaube ausgestaltet ist, wobei die Gutverteileinrichtung in ihrem rückwärtigen Bereich mit einem Gutstrom beschickt wird, der wahlweise oder zugleich aus einem Strohhäcksler oder einer Reinigungseinrichtung abgegeben wird und die Gutleitelemente in eine rechtsseitige und ein linksseitige Gruppe unterteilt sind und jede Gruppe von Gutleitelementen zumindest mit einer ersten und einer weiteren Führungsschienen gekoppelt ist, wobei jede der Führungsschienen eine Auslenkung des mit der jeweiligen Führungsschiene gekoppelten Gutleitelements bewirkt und die zumindest zwei Führungsschienen einer Gruppe von Gutleitelementen eine voneinander verschiedene Auslenkung des jeweiligen Gutleitelements bewirken wird sichergestellt, dass die Verteilung des aus der Gutverteileinrichtung austretenden Gutstranges über die Arbeitsbreite der landwirtschaftlichen Arbeitsmaschine feinfühliger gesteuert werden kann.

In einer vorteilhaften Ausgestaltung der Erfindung sind ein oder mehrere Gutleitelemente einer Gruppe von Gutleitelementen mit derselben Führungsschiene gekoppelt, sodass die feinfühligere Steuerung der Gutverteilung auf konstruktiv einfache und bauraumsparende Weise ermöglicht wird.

In einer weiteren vorteilhaften Ausgestaltung der Erfindung sind eine Mehrzahl benachbarter, innenliegender Gutleitelemente mit derselben Führungsschiene und eine Mehrzahl benachbarter, außenliegender Gutleitelemente mit der zumindest einen weiteren Führungsschiene gekoppelt, sodass jeweils die innenliegenden und die außenliegenden Gutleitelemente beider Gruppen von Gutleitelementen ein optimales Verteilverhalten aufweisen und das jeweilige Verteilverhalten auf die jeweils zu erreichende Verteilbreite angepasst ist.

Damit die auslenkungsbedingte Verformung der Gutleitelemente zu keinen Zwangskräften und damit verbundenen überhöhten Spannungen in den Gutleitelementen führt sind die Gutleitelemente einenends mit der jeweiligen Führungsschiene und anderenends mittels einer Schlitzführung mit der Auswurfhaube verbunden
Indem in einer vorteilhaften Weiterbildung der Erfindung die Verbindung zwischen dem jeweiligen Gutleitelement und der jeweiligen Führungsschiene dem gutabgabeseitigen Bereich des jeweiligen Gutleitelementes zugeordnet ist wird sichergestellt, dass die notwenigen, die Gutleitelemente verformenden Stellkräfte gering bleiben.

In einer vorteilhaften Weiterbildung der Erfindung ist die eine Schlitzführung umfassende Verbindung zwischen dem jeweiligen Gutleitelement und der Auswurfhaube dem guteingangsseitigen Bereich des jeweiligen Gutleitelementes zugeordnet. Dies hat insbesondere den Effekt, dass das rückwärtige Ende der Gutleitelemente den in die Gutverteileinrichtung eintretenden Gutstrang in seiner Bewegung nicht behindert, da das jeweilige Ende der Gutleitelemente so in eine die Fließrichtung des ankommenden Gutstrangs unterstützende Position gezwungen wird.

Indem der Stellweg der mit den innenliegenden Gutleitelementen gekoppelten Führungsschiene kürzer als der Stellweg der zumindest einen weiteren mit den außenliegenden Gutleitelementen gekoppelten Führungsschiene ist wird sichergestellt, dass die innenliegenden Gutleitelemente den Gutstrang in einem Bereich mit geringerer Querserstreckung auf dem Feld verteilen, während die außenliegenden Gutleitelemente eine so weite Auslenkung erfahren, dass auch über große Arbeitsbreiten der austretende Gutstrang sicher verteilt werden kann. Damit sich dieses Querverteilungsverhalten sicher einstellt ist in einer vorteilhaften Ausgestaltung der Erfindung vorgesehen, dass der kürzere Stellweg der ersten Führungsschiene einen geringeren Krümmungsradius der mit dieser Führungsschiene verbundenen Gutleitelemente und der längere Stellweg der weiteren Führungsschiene einen größeren Krümmungsradius der mit der weiteren Führungsschiene verbundenen Gutleitelemente bewirkt.

Eine konstruktiv einfache Gestaltung dieser Stellwege ergibt sich dann, wenn der jeweilige Stellweg durch eine in die jeweilige Führungsschiene eingearbeitete Langlochführung begrenzt wird, wobei jede Langlochführung mit Langlöchern in der Auswurfhaube korrespondiert und die Langlochführungen sowie die korrespondierenden Langlöcher annähernd parallel zueinander verlaufen.

Eine bauraumsparende Umsetzung der Bewegung der einzelnen Gutleitelemente wird in einer vorteilhaften Ausgestaltung der Erfindung dann erreicht, wenn die Führungsschienen einer Gruppe von Gutleitelementen über ein Koppelglied verstellbar miteinander gekoppelt sind, wobei das Koppelglied drehbeweglich in der Auswurfhaube gelagert ist. Eine besonders effiziente Umsetzung der die Gutleitelemente auslenkenden Stellwege wird dann möglich, wenn das Koppelglied Langlochführungen aufnimmt und jede der Führungsschienen in einer der Langlochführungen geführt wird. Indem in diesem Zusammenhang die Langlochführung der ersten Führungsschiene kurvenbahnförmig ausgeführt ist und so um die Drehachse des Koppelgliedes positioniert ist, dass diese den kürzeren Stellweg bewirkt und die Langlochführung der weiteren Führungsschiene linear ausgeführt ist und so um die Drehachse des Koppelgliedes positioniert ist, dass diese den längeren Stellweg bewirkt kann mit einer einzigen Positionsänderung des Koppelgliedes der Stellweg für alle Gutleitelemente angepasst werden.

Je nach Bedarf kann in einer weiteren vorteilhaften Ausgestaltung der Erfindung vorgesehen sein, dass die Änderung der Position des Koppelglieds händisch oder maschinell bewirkt wird. Im einfachsten Fall wird in diesem Zusammenhang die maschinelle Änderung der Position des Koppelgliedes mittels eines Stellzylinders bewirkt. Dies hat insbesondere den Effekt, dass in einer weiteren vorteilhaften Ausgestaltung der Erfindung sodann die Aktivierung des Stellzylinders in Abhängigkeit von Maschinen-, und/oder Erntegut- und/oder Umgebungsparametern bewirkt werden kann. Eine besonders effiziente Arbeitsweise einer automatisierten Verteilung des aus dem Gutverteiler austretenden Gutstrangs kann in einer vorteilhaften Ausgestaltung dann bewirkt werden, wenn ein Maschinenparameter die Vorsatzgerätebreite, und/oder ein Erntegutparameter die Gutart- oder -feuchtigkeit und/oder ein Umgebungsparameter ein detektierter Seitenwind und/oder eine Neigung des Mähdreschers ist.

Weitere vorteilhafte Ausgestaltungen sind Gegenstand weiterer Unteransprüche und werden nachfolgend an Hand in mehreren Figuren dargestellter Ausführungsbeispiele beschrieben. Es zeigen:
- Figur 1: einen Mähdrescher mit erfindungsgemäßer Gutverteileinrichtung
- Figur 2a, 2b: eine erste Detaildarstellung der erfindungsgemäßen Gutverteileinrichtung
- Figur 3: eine weitere Detaildarstellung der Gutverteileinrichtung in einer Draufsicht
- Figur 4: eine Detaildarstellung der Gutverteileinrichtung in einer Ansicht von unten
- Figur 4a: eine Detailbeschreibung zu Figur 4

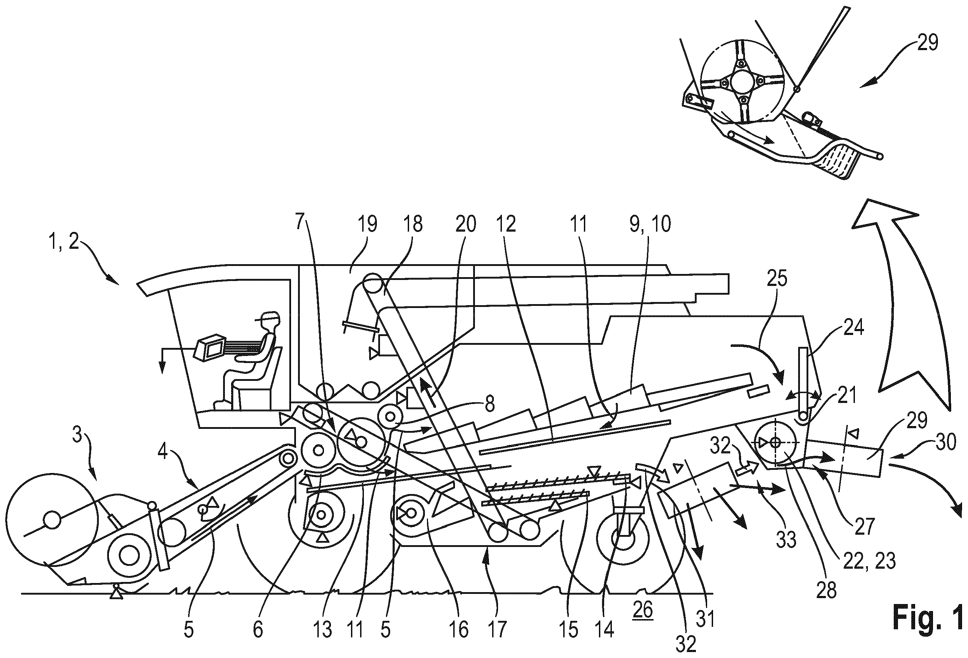

Die in Fig. 1 schematisch dargestellte, als Mähdrescher 2 ausgeführte landwirtschaftliche Arbeitsmaschine 1 nimmt in ihrem frontseitigen Bereich ein Getreideschneidwerk 3 auf, welches in an sich bekannter Weise mit dem Schrägförderer 4 des Mähdreschers 2 verbunden ist. Der den Schrägförderer 4 durchlaufende Erntegutstrom 5 wird in dem obenseitigen, rückwärtigen Bereich des Schrägförderers 4 an die untenseitig zumindest teilweise von einem sogenannten Dreschkorb 6 ummantelten Dreschorgane 7 des Mähdreschers 2 übergeben. Eine den Dreschorganen 7 nachgeordnete Umlenktrommel 8 lenkt den im rückwärtigen Bereich der Dreschorgane 7 aus diesen austretenden Gutstrom 5 so um, dass er unmittelbar an eine als Hordenschüttler 9 ausgeführte Trenneinrichtung 10 übergeben wird. Es liegt im Rahmen der Erfindung, dass die Trenneinrichtung 10 auch als an sich bekannter und deshalb nicht dargestellter Trennrotor ausgeführt sein kann. Auf dem rotierenden Hordenschüttler 9 wird der Gutstrom 5 so gefördert, dass in dem Gutstrom 5 enthaltene freibewegliche Körner 11 im untenseitigen Bereich des Hordenschüttlers 9 abgeschieden werden. Sowohl die am Dreschkorb 6 als auch am Hordenschüttler 9 abgeschiedenen Körner 11 werden über Rücklaufboden 12 und Zuführboden 13 einer aus mehreren Siebebenen 14, 15 und einem Gebläse 16 bestehenden Reinigungseinrichtung 17 zugeführt. Der gereinigte Körnerstrom 20 wird schließlich mittels Elevatoren 18 an einen Korntank 19 übergeben.

Im rückwärtigen Bereich der als Hordenschüttler 9 ausgeführten Trenneinrichtung 10 ist dieser eine von einem trichterförmigen Gehäuse 21 ummantelte, als Strohhäcksler 22 ausgeführte Zerkleinerungseinrichtung 23 zugeordnet. Dem Strohhäcksler 22 wird obenseitig das den Hordenschüttler 9 im rückwärtigen Bereich verlassende Stroh 25 zugeführt. Mittels einer verschwenkbaren Strohleitklappe 24 kann das den Hordenschüttler 9 verlassende Stroh 25 auch so umgelenkt werden, dass es direkt auf dem Boden 26 in einem Schwad abgelegt wird. Im Austrittsbereich 27 des Strohhäckslers 22 wird der aus dem zerkleinerten Stroh 25 bestehende Gutstrom 28 an die erfindungsgemäße und noch näher zu beschreibende Gutverteileinrichtung 29 übergeben, die in ebenfalls noch näher zu beschreibender Weise in ihrem Austrittsbereich 30 den Gutstrom 28 so abgibt, dass es zu einer Breitverteilung des Gutstromes 28 auf dem Boden 26 kommt.

Im dargestellten Ausführungsbeispiel ist der Reinigungseinrichtung 17 in ihrem rückwärtigen Bereich eine Spreufördereinrichtung 31 zugeordnet, die in an sich bekannter und daher nicht näher beschriebenen Weise entweder als Spreuwurfgebläse oder Spreuverteiler ausgebildet sein kann. Die aus der Reinigungseinrichtung 17 austretende Spreu 32 wird obenseitig der Spreufördereinrichtung 31 zugeführt. Wird das Stroh 25 zwecks Zerkleinerung an den Strohhäcksler 22 übergeben und mittels der Gutverteileinrichtung 29 auf dem Boden 26 verteilt, dann ist die Spreufördereinrichtung 31 als Spreuwurfgebläse ausgeführt. In diesem Fall wird die von der Spreufördereinrichtung 31 geförderte Spreu 32 in ihrem rückwärtigen Bereich 33 unmittelbar an die Gutverteileinrichtung 29 übergeben, wobei diese das zerkleinerte Stroh 25 und die Spreu 32 in einem einzigen Gutstrom 28 auf dem Boden 26 verteilt. Wird das Stroh 25 als Schwad auf dem Boden 26 abgelegt ist der Strohhäcksler 22 außer Betrieb. In diesem Fall ist die Spreufördereinrichtung 31 als Spreuverteiler ausgebildet, wobei die Gutverteileinrichtung 29 dann nur die Spreu 32 auf dem Boden 26 verteilt.

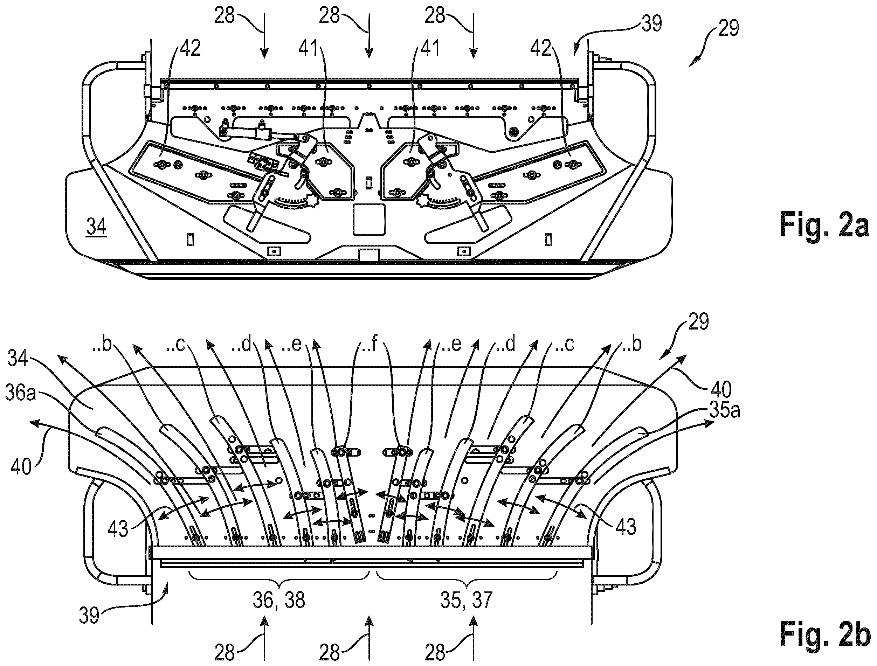

In Figur 2 ist nun zunächst die erfindungsgemäße Gutverteileinrichtung 29 in der Draufsicht (Figur 2a) und in der nach unten geklappten Ansicht von unten (Figur 2b) dargestellt. Die Gutverteileinrichtung 29 umfasst eine Auswurfhaube 34, welche innenseitig mit Gutleitelementen 35a..f, 36a..f bestückt ist. Die Gutleitelemente 35, 36 sind spiegelbildlich zur Mitte der Auswurfhaube 34 in eine in Auswurfrichtung 40 des Gutstroms 28 gesehene rechtsseitige Gruppe 37 und eine linksseitige Gruppe 38 von Gutleitelementen 35, 36 zusammengefasst. Es liegt im Rahmen der Erfindung, dass jede Gruppe 37, 38 von Gutleitelementen 36, 37 mehr oder weniger als die im Ausführungsbeispiel dargestellten jeweils sechs Gutleitelemente 35, 36 umfasst. Der Gutverteileinrichtung 29 und damit auch der Auswurfhaube 34 wird in ihrem rückwärtigen Bereich 39 der bereits beschriebene Gutstrom 28 zugeführt und entlang der jeweiligen Gutleitelemente 35, 36 durch die Auswurfhaube 39 der Gutleieinrichtung 29 in der jeweiligen Auswurfrichtung 40 aus der Gutverteileinrichtung 29 herausgefördert.

Erfindungsgemäß sind die Gutleitelemente 35, 36 jeder Gruppe 37, 38 von Gutleitelementen 35, 36 in noch näher zu beschreibender Weise jeweils mit einer ersten Führungsschiene 41 und zumindest einer weiteren Führungsschiene 42 gekoppelt, wobei jede der Führungsschienen 41, 42 eine Auslenkung 43 des mit der jeweiligen Führungsschiene 41, 42 gekoppelten Gutleitelements 35a..f, 36a..f bewirkt, wobei die zumindest zwei Führungsschienen 41, 42 einer Gruppe 37, 38 von Gutleitelementen 35a..f, 36a..f in ebenfalls noch näher zu beschreibender Weise eine voneinander verschiedene Auslenkung 43 des jeweiligen Gutleitelements 35a..f, 36a..f bewirken.

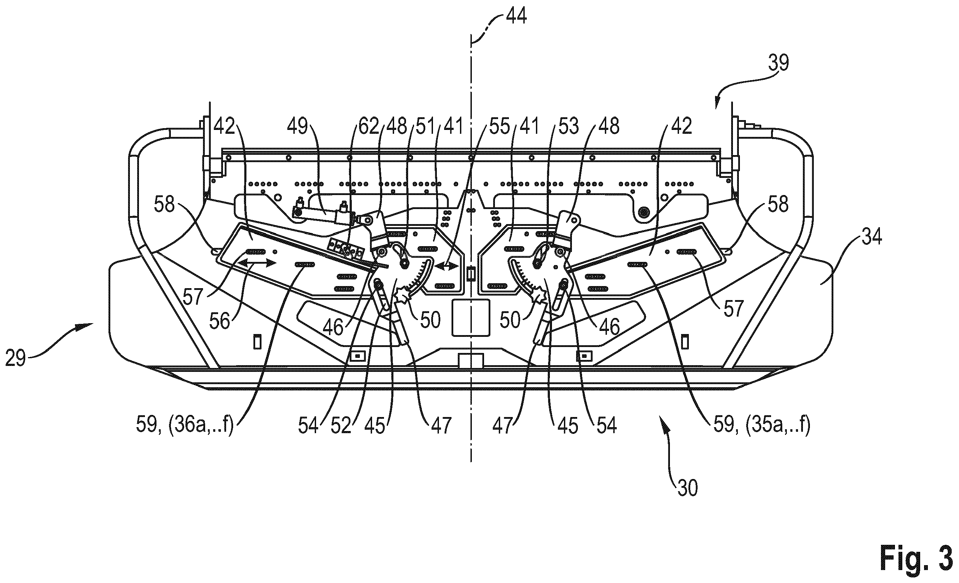

Figur 3 beschreibt nun zunächst näher die Positionierung und Anlenkung der erfindungsgemäßen Führungsschienen 41, 42. Der Auswurfhaube 34 sind spiegelbildlich zu ihrer Mitte 44 Koppelglieder 45 zugeordnet, wobei jedes der Koppelglieder 45 um eine Drehachse 46 drehbar von der Auswurfhaube 34 aufgenommen wird. Im dargestellten Ausführungsbeispiel ist jedem Koppelglied 45 im gutabgabeseitigen Bereich ein Handhebel 47 angeformt, um eine Positionsänderung des jeweiligen Koppelgliedes 45 um die besagte Drehachse 46 händisch zu bewirken. Zudem ist jedem Koppelglied 45 im rückwärtigen Bereich 39 der Gutverteileinrichtung 29 eine Aufnahme 48 angeformt, die das kolbenstangenseitige Ende eines elektrisch oder hydraulisch betriebenen Stellzylinders 49 aufnimmt. Aus Vereinfachungsgründen wird der Stellzylinder 49 nur linksseitig in Figur 3 dargestellt, sodass im Folgenden die Erfindung nur anhand der linkseitigen Struktur der Gutverteileinrichtung 29 beschrieben wird, wobei diese Beschreibungen in analoger Weise auf die rechtsseitige Struktur der Gutverteileinrichtung 29 zutreffen. Die Aktivierung des jeweiligen Stellzylinders 49 kann automatisiert erfolgen, sodass die Positionsänderung des jeweiligen Koppelgliedes 45 um die besagte Drehachse 46 auch automatisiert erfolgen kann. Es liegt im Rahmen der Erfindung, dass Handhebel 47 und Stellzylinder 49 entweder alternativ oder zugleich zur Positionsänderung des jeweiligen Koppelgliedes 45 vorhanden sein können. Damit im Falle der händischen Positionsänderung die Zielposition fixiert werden kann verfügt jedes Koppelglied über einen an sich bekannten und daher hier nicht näher beschriebenen Arretiermechanismus 50.

Jedem Koppelglied 45 sind eine kurvenbahnförmige Langlochführung 51 und eine lineare Langlochführung 52 angeformt, wobei die kurvenbahnförmige Langlochführung 51 in einem geringeren Abstand zur Drehachse 46 des jeweiligen Kopplegliedes 45 als die lineare Langlochführung 52 positioniert ist. Beide Langlochführungen 51, 52 sind zudem in Richtung des Austrittsbereich 30 der Gutverteileinrichtung 29 orientiert. Die kurvenbahnförmige Langlochführung 51 ist über eine Schraubverbindung 53 mit der jeweils ersten Führungsschien 41 in der Weise verbunden, dass sich die Schraubverbindung 53 innerhalb der Langlochführung 51 bewegen kann. Die lineare Langlochführung 52 ist ebenfalls über eine Schraubverbindung 54 mit der weiteren Führungsschiene 42 in der Weise verbunden, dass sich die Schraubverbindung 54 innerhalb dieser Langlochführung 52 bewegen kann. Indem beide Schraubverbindungen 53, 54 in Langlochführungen 51, 52 bewegt werden die unterschiedlich beabstandet zur Drehachse 46 des jeweiligen Koppelgliedes 45 positioniert sind legen die Führungsschienen 41, 42 unterschiedlich lange Stellwege 55, 56 zurück. Aufgrund des geringeren Abstandes der kurvenbahnförmigen Langlochführung 51 zur Drehachse 46 des Koppelgliedes 45 legt die erste Führungsschiene 41 einen kürzen Stellweg 55 als die weiter Führungsschiene 42 zurück, da die lineare Langlochführung 52 weiter von der Drehachse 46 des jeweiligen Koppelgliedes 45 entfernt ist.

Jede Führungsschiene 41, 42 wird zur Begrenzung des jeweiligen Stellweges 55, 56 von Langlochführungen 57 durchsetzt, die mit in die Auswurfhaube 34 eingelassenen Langlöchern 58 korrespondieren und sowohl die Langlochführungen 57 als auch die korrespondierenden Langlöcher 58 nahezu parallel zueinander positioniert sind. Jede der Langlochführungen 57 wird von Schraubverbindungen 59 durchsetzt, wobei die Schraubverbindungen 59 im Inneren der Auswurfhabe 34 jeweils mit einem Gutleitelement 35a..f, 36a..f in noch näher zu beschreibender Weise verbunden sind. Indem die Führungsschienen 41, 42 über diese Schraubverbindungen 59 mit dem jeweiligen Gutleitelement 35a..f, 36a..f verbunden sind wird der von den Führungsschienen 41, 42 zurückgelegte Stellweg 55, 56 auf das jeweilige Gutelement 35a..f, 36a..f übertragen.

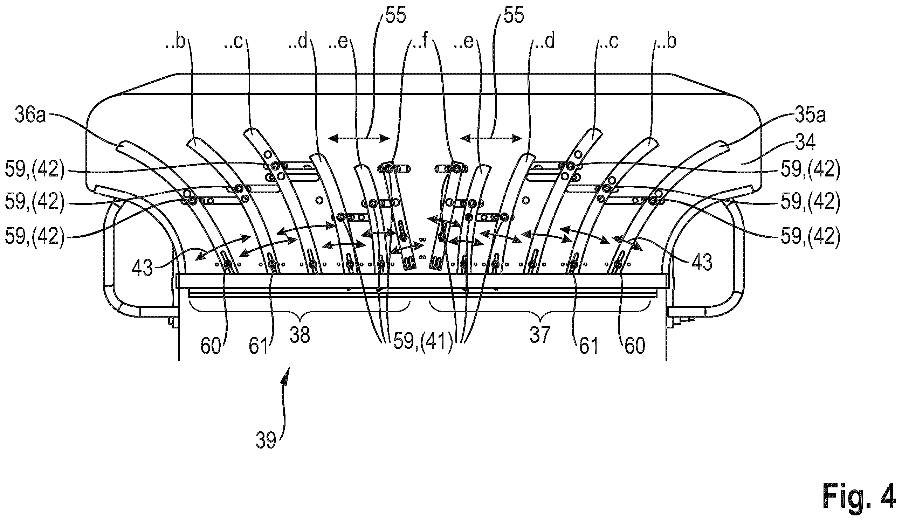

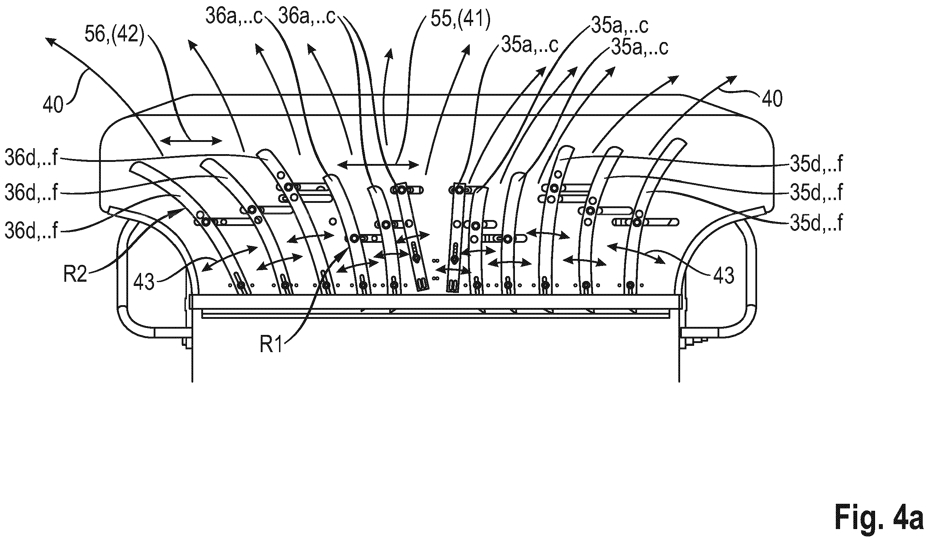

Figur 4 beschreibt nun näher die Positionierung und Anlenkung der erfindungsgemäßen Gutleitelemente 35a..f, 36a..f. In erfindungsgemäßer Weise sind im dargestellten Ausführungsbeispiel die jeweils ersten drei Gutleitelemente 35a..c, 36a..c der rechten und linken Gruppe 37, 38 von Gutleitelementen 35, 36 mit der jeweils ersten Führungsschiene 41 mittels der bereits beschriebenen Schraubverbindungen 59 verbunden. Zugleich sind im dargestellten Ausführungsbeispiel die jeweils äußeren drei Gutleitelemente 35d..f, 36d..f der rechten und linken Gruppe 37, 38 von Gutleitelementen 35, 36 mit der wenigstens einen weiteren Führungsschiene 42 mittels der bereits beschriebenen Schraubverbindungen 59 verbunden. Im rückwärtigen Bereich 39 der Auswurfhaube 34, was dem guteingangsseitigen Bereich des jeweiligen Gutleitelementes 35a..f, 36a..f. entspricht sind alle Gutleitelemente 35, 36 mittels weiterer Schraubverbindungen 60 so an der Auswurfhaube 34 befestigt, dass sich jedes Gutleitelemente 35, 36 in einer jedem Gutleitelement 35, 36 angeformten Schlitzführung 61 entlang der jeweiligen Schraubverbindung 60 bewegen kann. Diese Art der Koppelung von Führungsschienen 41, 42 und Gutleitelementen 35a..f, 36a..f führt gemäß vorherigen Ausführungen dazu, dass der von den ersten Führungsschiene 41 zurückgelegte kürzere Stellweg 55 über die jeweiligen Schraubverbindungen 59 jeweils auf die mit dieser Führungsschiene 41 gekoppelten Gutleitelemente 35a..c, 36a..c übertragen wird. In analoger Weise wird der von den weiteren Führungsschiene 42 zurückgelegte längere Stellweg 56 über die jeweiligen Schraubverbindungen 59 jeweils auf die mit dieser Führungsschiene 42 gekoppelten Gutleitelemente 35d..f, 36d..f übertragen. Dies führt dazu, dass die mit der jeweiligen Führungsschiene 41, 42 gekoppelten Gutleitelemente 35a..f, 36a..f. in Abhängigkeit vom jeweiligen Stellweg 55, 56 voneinander verschieden ausgelenkt werden. Dabei erfahren die mit der jeweils ersten Führungsschiene 41 gekoppelten Gutleitelemente 35a..c, 36a..c eine geringere Auslenkung 43 als die mit der zumindest einen weiteren Führungsschiene 42 gekoppelten Gutleitelemente 35d..f, 36d..f. Es liegt im Rahmen der Erfindung, dass die Anzahl benachbarter, innenliegender Gutleitelemente 35a..c, 36a..c, die mit der ersten Führungsschiene 41 gekoppelt sind und die Anzahl benachbarter, außenliegender Gutleitelemente 35d..f, 36d..f, welche mit der zumindest einen weiteren Führungsschiene 42 gekoppelt sind von der offenbarten Anzahl von jeweils drei Gutleitelementen 35, 36 wie auch die Gesamtzahl aller Gutleitelemente 35a..f, 36a..f. nach oben oder unten vom beispielhaft dargestellten Ausführungsbeispiel abweichen kann. Es liegt zudem im Rahmen der Erfindung, dass die Anzahl der Führungsschienen 41, 42 abweichend vom dargestellten Ausführungsbeispiel auch mehr als zwei Führungsschienen 41, 42 umfassen kann. Indem mehr als zwei Führungsschienen 41, 42 je Gruppe von 37, 38 von Gutleitelementen 35, 36 eingesetzt werden, kann die Stellweg-abhängige Auslenkung 43 der Gutleitelemente 35, 36 feinfühliger eingestellt werden.

Erfindungsgemäß führt gemäß Figur 4a (linker Teil der Abbildung, rechter Teil der Abbildung zeigt schematisch den unausgelenkten Zustand) der kürzere Stellweg 55 der ersten Führungsschiene 41 zu einen geringeren Krümmungsradius R1 der mit dieser Führungsschiene 41 verbundenen Gutleitelemente 35a..c, 36a..c während der längere Stellweg 56 der weiteren Führungsschiene 42 einen größeren Krümmungsradius R2 der mit der weiteren Führungsschiene 42 verbundenen Gutleitelemente 35d..f, 36d..f bewirkt.

Damit die Positionierung der Stellzylinder 49 ausreichend genau gesteuert werden kann sind den Positionszylindern 49 entweder in an sich bekannter Weise hier nicht näher dargestellte Positionssensoren zugeordnet, die ein präzises Aus- und Einfahren der jeweiligen Kolbenstange ermöglichen. Gemäß Figur 3 kann dem jeweiligen Koppelglied 45 auch ein an sich bekannter und hier nicht näher beschriebener Positionssensor 62 zugeordnet sein, der die genaue Stellung des jeweiligen Koppelgliedes 45 ermittelt.

Indem die Position der Stellzylinder 49 bestimmbar ist kann die Auswurfrichtung 40 der Gutverteileinrichtung 29 durch positionsgenaue Änderung der Auslenkung 43 der Gutleitelemente 35, 36 geändert werden, sodass in Abhängigkeit von Maschinen-, und/oder Erntegut- und/oder Umgebungsparametern die Auswurfrichtung 40 beeinflussbar ist. Vorzugsweise können in diesem Zusammenhang ein Maschinenparameter die Vorsatzgerätebreite, und/oder ein Erntegutparameter die Gutart- oder -feuchtigkeit und/oder ein Umgebungsparameter ein detektierter Seitenwind und/oder eine Neigung des Mähdreschers sein.

**Bezugszeichenliste:**

| | | | |
|---|---|---|---|
| 1 | landwirtschaftliche Arbeitsmaschine | 31 | Spreufördereinrichtung |
| 2 | Mähdrescher | 32 | Spreu |
| 3 | Getreideschneidwerk | 33 | rückwärtiger Bereich |
| 4 | Schrägförderer | 34 | Auswurfhaube |
| 5 | Erntegutstrom | 35 | Gutleitelement |
| 6 | Dreschkorb | 36 | Gutleitelement |
| 7 | Dreschorgan | 37 | rechtsseitige Gruppe |
| 8 | Umlenktrommel | 38 | linkseitige Gruppe |
| 9 | Hordenschüttler | 39 | rückwärtiger Bereich |
| 10 | Trenneinrichtung | 40 | Auswurfrichtung |
| 11 | Körner | 41 | Führungsschiene |
| 12 | Rücklaufboden | 42 | Führungsschiene |
| 13 | Zuführboden | 43 | Auslenkung |
| 14 | Siebebene | 44 | Mitte Auswurfhaube |
| 15 | Siebebene | 45 | Koppelglied |
| 16 | Gebläse | 46 | Drehachse |
| 17 | Reinigungseinrichtung | 47 | Handhebel |
| 18 | Elevator | 48 | Aufnahme |
| 19 | Korntank | 49 | Stellzylinder |
| 20 | Körnerstrom | 50 | Arretiermechanismus |
| 21 | Gehäuse | 51 | kurvenbahnförmige Langlochführung |
| 22 | Strohhäcksler | 52 | lineare Langlochführung |
| 23 | Zerkleinerungseinrichtung | 53 | Schraubverbindung |
| 24 | Strohleitklappe | 54 | Schraubverbindung |
| 25 | Stroh | 55 | Stellweg |
| 26 | Boden | 56 | Stellweg |
| 27 | Austrittsbereich | 57 | Langlochführung |
| 28 | Gutstrom | 58 | Langloch |
| 29 | Gutverteileinrichtung | 59 | Schraubverbindung |
| 30 | Austrittsbereich | 60 | Schraubverbindung |
| | | 61 | Schlitzführung |
| | | R1 | Krümmungsradius |
| | | R2 | Krümmungsradius |

## Patentansprüche

1. Gutverteileinrichtung für Mähdrescher mit zumindest einer innenseitig mit Gutleitelementen bestückten Auswurfhaube, wobei die Gutverteileinrichtung in ihrem rückwärtigen Bereich mit einem Gutstrom beschickt wird, der wahlweise oder zugleich aus einem Strohhäcksler oder einer Reinigungseinrichtung abgegeben wird,
**dadurch gekennzeichnet, dass** die Gutleitelemente (35, 36) in eine rechtsseitige und ein linksseitige Gruppe (37, 38) unterteilt sind und jede Gruppe (37, 38) von Gutleitelementen (35, 36) zumindest mit einer ersten und einer weiteren Führungsschiene (41, 42) gekoppelt ist, wobei jede der Führungsschienen (41, 42) eine Auslenkung (43) des mit der jeweiligen Führungsschiene (41, 42) gekoppelten Gutleitelements (35a..f, 36a..f) bewirkt und die zumindest zwei Führungsschienen (41, 42) einer Gruppe von Gutleitelementen (35a..f, 36a..f) eine voneinander verschiedene Auslenkung (43) des jeweiligen Gutleitelements (35, 36) bewirken.

2. Gutverteileinrichtung für Mähdrescher nach Anspruch 1,
**dadurch gekennzeichnet, dass**
ein oder mehrere Gutleitelemente (35a..f, 36a..f) einer Gruppe (37, 38) von Gutleitelementen (35, 36) mit derselben Führungsschiene (41, 42) gekoppelt sind.

3. Gutverteileinrichtung für Mähdrescher nach Anspruch 2,
**dadurch gekennzeichnet, dass**
eine Mehrzahl benachbarter, innenliegender Gutleitelemente (35a..c, 36a..c) mit derselben Führungsschiene (41) gekoppelt sind und dass eine Mehrzahl benachbarter, außenliegender Gutleitelemente (35d..f, 36d..f) mit der zumindest einen weiteren Führungsschiene (42) gekoppelt sind.

4. Gutverteileinrichtung für Mähdrescher nach einem der vorhergehenden Ansprüche, **dadurch gekennzeichnet, dass**
die Gutleitelemente (35, 36) einenends mit der jeweiligen Führungsschiene (41, 42) und anderenends mittels einer Schlitzführung (61) mit der Auswurfhaube (34) verbunden sind.

5. Gutverteileinrichtung für Mähdrescher nach Anspruch 4,
**dadurch gekennzeichnet, dass**
die Verbindung zwischen dem jeweiligen Gutleitelement (35a..f, 36a..f) und der jeweiligen Führungsschiene (41, 42) dem gutabgabeseitigen Bereich des jeweiligen Gutleitelementes (35a..f, 36a..f) zugeordnet ist.

6. Gutverteileinrichtung für Mähdrescher nach Anspruch 4,
**dadurch gekennzeichnet, dass**
die eine Schlitzführung (61) umfassende Verbindung zwischen dem jeweiligen Gutleitelement (35, 36) und der Auswurfhaube (34) dem guteingangsseitigen Bereich des jeweiligen Gutleitelementes (35, 36) zugeordnet ist.

7. Gutverteileinrichtung für Mähdrescher nach einem der vorhergehenden Ansprüche, **dadurch gekennzeichnet, dass**
der Stellweg (55) der mit den innenliegenden Gutleitelementen (35a..c, 36a..c) gekoppelten Führungsschiene (41) kürzer als der Stellweg (56) der zumindest einen weiteren mit den außenliegenden Gutleitelementen (35d..f, 36d..f) gekoppelten Führungsschiene (42) ist.

8. Gutverteileinrichtung für Mähdrescher nach Anspruch 7,
**dadurch gekennzeichnet, dass**
der kürzere Stellweg (55) der ersten Führungsschiene (41) einen geringeren Krümmungsradius (R1) der mit dieser Führungsschiene (41) verbundenen Gutleitelemente (35a..c, 36a..c) und der längere Stellweg (56) der weiteren Führungsschiene (42) einen größeren Krümmungsradius (R2) der mit der weiteren Führungsschiene (42) verbundenen Gutleitelemente (35d..f, 36d..f) bewirkt.

9. Gutverteileinrichtung für Mähdrescher nach einem der Ansprüche 7 oder 8,
**dadurch gekennzeichnet, dass**
der jeweilige Stellweg (55, 56) durch eine in die jeweilige Führungsschiene (41, 42) eingearbeitete Langlochführung (57) begrenzt wird, wobei jede Langlochführung (57) mit Langlöchern (58) in der Auswurfhaube (34) korrespondiert und die Langlochführungen (57) sowie die korrespondierenden Langlöcher (58) annähernd parallel zueinander verlaufen.

10. Gutverteileinrichtung für Mähdrescher nach einem der vorhergehenden Ansprüche, **dadurch gekennzeichnet, dass**
die Führungsschienen (41, 42) einer Gruppe (38, 39) von Gutleitelementen (35, 36) über ein Koppelglied (45) verstellbar miteinander gekoppelt sind, wobei das Koppelglied (45) mittels einer Drehachse (46) drehbeweglich in der Auswurfhaube (34) gelagert ist.

11. Gutverteileinrichtung für Mähdrescher nach Anspruch 10,
**dadurch gekennzeichnet, dass**
das Koppelglied (45) Langlochführungen (51, 52) aufnimmt und jede der Führungsschienen (41, 42) in einer der Langlochführungen (51, 52) geführt wird.

12. Gutverteileinrichtung für Mähdrescher nach Anspruch 11,
**dadurch gekennzeichnet, dass**
die Langlochführung (51) der ersten Führungsschiene (41) kurvenbahnförmig ausgeführt ist und so um die Drehachse (46) des Koppelgliedes (45) positioniert ist, dass diese den kürzeren Stellweg (55) bewirkt.

13. Gutverteileinrichtung für Mähdrescher nach Anspruch 10,
**dadurch gekennzeichnet, dass**
die Langlochführung (52) der weiteren Führungsschiene (42) linear ausgeführt ist und so um die Drehachse (46) des Koppelgliedes (45) positioniert ist, dass diese den längeren Stellweg (56) bewirkt.

14. Gutverteileinrichtung für Mähdrescher nach einem der Ansprüche 10 bis 13,
**dadurch gekennzeichnet, dass**
eine Änderung der Position des Koppelgliedes (45) eine Änderung der Stellwege (55, 56) bewirkt, wobei die Änderung der Position des Koppelglieds (45) händisch oder maschinell bewirkt wird.

15. Gutverteileinrichtung für Mähdrescher nach Anspruch 14,
**dadurch gekennzeichnet, dass**
die maschinelle Änderung der Position des Koppelgliedes (45) mittels Stellzylinder (49) erfolgt.

16. Gutverteileinrichtung für Mähdrescher nach Anspruch 14,
**dadurch gekennzeichnet, dass**
die Aktivierung des Stellzylinders (49) in Abhängigkeit von Maschinen-, und/oder Erntegut- und/oder Umgebungsparametern bewirkt wird.

17. Gutverteileinrichtung für Mähdrescher nach Anspruch 15,
**dadurch gekennzeichnet, dass**
ein Maschinenparameter die Vorsatzgerätebreite, und/oder ein Erntegutparameter die Gutart- oder -feuchtigkeit und/oder ein Umgebungsparameter ein detektierter Seitenwind und/oder eine Neigung des Mähdreschers (2) sein kann.

## Claims

1. A material spreading device for a combine harvester with at least one discharge hood which is fitted on the inside with material guide elements, wherein a flow of material is supplied to the rearward region of the material spreading device, the material flow being selectively or concurrently delivered from a straw chopper or a cleaning device,
**characterized in that**
the material guide elements (35, 36) are divided into a right side and a left side group (37, 38) and each group (37, 38) of material guide elements (35, 36) is coupled to at least a first and a further guide rail (41, 42), wherein each of the guide rails (41, 42) brings about a deflection (43) of the material guide element (35a..f, 36a..f) coupled to the respective guide rail (41, 42) and the at least two guide rails (41, 42) of a group of material guide elements (35a..f, 36a..f) bring about a deflection (43) of the respective material guide element (35, 36) which is distinct one from the other.

2. The material spreading device for a combine harvester according to claim 1,
**characterized in that**
one or more material guide elements (35a..f, 36a..f) of a group (37, 38) of material guide elements (35, 36) are coupled to the same guide rail (41, 42).

3. The material spreading device for a combine harvester according to claim 2,
**characterized in that**
a plurality of adjacent, inward-lying material guide elements (35a..c, 36a..c) are coupled to the same guide rail (41) and **in that** a plurality of adjacent, outward-lying material guide elements (35d..f, 36d..f) are coupled to the at least one further guide rail (42).

4. The material spreading device for a combine harvester according to one of the preceding claims, **characterized in that**
the material guide elements (35, 36) are connected at one end to the respective guide rail (41, 42) and at the other end to the discharge hood (34) by means of a slot guide (61).

5. The material spreading device for a combine harvester according to claim 4,
**characterized in that**
the connection between the respective material guide element (35a..f, 36a..f) and the respective guide rails (41, 42) is associated with the material discharge-side region of the respective material guide element (35a..f, 36a..f).

6. The material spreading device for a combine harvester according to claim 4,
**characterized in that**
the connection comprising a slot guide (61) between the respective material guide element (35, 36) and the discharge hood (34) is associated with the material inlet-side region of the respective material guide element (35, 36).

7. The material spreading device for a combine harvester according to one of the preceding claims,
**characterized in that**
the path of travel (55) of the guide rail (41) coupled to the inward-lying material guide elements (35a..c, 36a..c) is shorter than the path of travel (56) of the at least one further guide rail (42) coupled to the outward-lying material guide elements (35d..f, 36d..f).

8. The material spreading device for a combine harvester according to claim 7,
**characterized in that**
the shorter path of travel (55) of the first guide rail (41) brings about a smaller radius of curvature (R1) of the material guide elements (35a..c, 36a..c) connected to this guide rail (41) and the longer path of travel (56) of the further guide rail (42) brings about a larger radius of curvature (R2) of the material guide elements (35d..f, 36d..f) connected to the further guide rail (42).

9. The material spreading device for a combine harvester according to one of claims 7 or 8,
**characterized in that**
the respective path of travel (55, 56) is limited by an elongated slot guide (57) incorporated into the respective guide rail (41, 42), wherein each elongated slot guide (57) corresponds to elongated slots (58) in the discharge hood (34) and the elongated slot guides (57) as well as the corresponding elongated slots (58) extend approximately parallel with respect to each other.

10. The material spreading device for a combine harvester according to one of the preceding claims,
**characterized in that**
the guide rails (41, 42) of a group (38, 39) of material guide elements (35, 36) are adjustably coupled to each other via a coupling link (45), wherein the coupling link (45) is rotatably mounted in the discharge hood (34) by means of an axis of rotation (46).

11. The material spreading device for a combine harvester according to claim 10,
**characterized in that**
the coupling link (45) accommodates elongated slot guides (51, 52) and each of the guide rails (41, 42) is guided in one of the elongated slot guides (51, 52).

12. The material spreading device for a combine harvester according to claim 11,
**characterized in that**
the elongated slot guide (51) of the first guide rail (41) is constructed in the form of a curved path and thus is positioned about the axis of rotation (46) of the coupling link (45) such that it brings about the shorter path of travel (55).

13. The material spreading device for a combine harvester according to claim 10,
**characterized in that**
the elongated slot guide (52) of the further guide rail (42) is linear in construction and thus is positioned about the axis of rotation (46) of the coupling link (45) such that it brings about the longer path of travel (56).

14. The material spreading device for a combine harvester according to one of claims 10 to 13,
**characterized in that**
a change in the position of the coupling link (45) brings about a change in the paths of travel (55, 56), wherein the change in the position of the coupling link (45) is brought about manually or mechanically.

15. The material spreading device for a combine harvester according to claim 14,
**characterized in that**
the mechanical change in the position of the coupling link (45) is carried out by means of a positioning cylinder (49).

16. The material spreading device for a combine harvester according to claim 14,
**characterized in that**
the actuation of the positioning cylinder (49) is brought about as a function of machine parameters and/or harvested material parameters and/or environmental parameters.

17. The material spreading device for a combine harvester according to claim 15,
**characterized in that**
a machine parameter can be the width of the front attachment and/or a harvested material parameter can be the type of material or material moisture content and/or an environmental parameter can be a detected crosswind and/or an inclination of the combine harvester (2).

## Revendications

1. Dispositif de distribution de matières destiné à des moissonneuses-batteuses, comprenant au moins un capot de projection doté à l'intérieur d'éléments de guidage de matières, le dispositif de distribution de matières étant alimenté dans sa partie arrière avec un flux de matières qui est délivré en alternance ou en même temps par un broyeur de paille ou un dispositif de nettoyage,
**caractérisé en ce que**
les éléments de guidage de matières (35, 36) sont divisés en un groupe côté droit et un groupe côté gauche (37, 38) et chaque groupe (37, 38) d'éléments de guidage de matières (35, 36) est couplé au moins à une première glissière de guidage et à une glissière de guidage supplémentaire (41, 42), chacune des glissières de guidage (41, 42) provoquant une déviation (43) de l'élément de guidage de matières (35a..f, 36a..f) couplé à la glissière de guidage (41, 42) respective, et les glissières de guidage (41, 42), au nombre d'au moins deux, d'un groupe d'éléments de guidage de matières (35a..f, 36a..f) provoquant une déviation (43) différente de l'élément de guidage de matières (35, 36) respectif.

2. Dispositif de distribution de matières pour moissonneuses-batteuses selon la revendication 1,
**caractérisé en ce que**
un ou plusieurs éléments de guidage de matières (35a..f, 36a..f) d'un groupe (37, 38) d'éléments de guidage de matières (35, 36) sont couplés à la même glissière de guidage (41, 42).

3. Dispositif de distribution de matières pour moissonneuses-batteuses selon la revendication 2,
**caractérisé en ce que**
une pluralité d'éléments de guidage de matières (35a..c, 36a..c) voisins, situés à l'intérieur, sont couplés à la même glissière de guidage (41) et **en ce qu'**une pluralité d'éléments de guidage de matières (35d..f, 36d..f) voisins, situés à l'extérieur, sont couplés à la glissière de guidage (42) supplémentaire, au nombre d'au moins une.

4. Dispositif de distribution de matières pour moissonneuses-batteuses selon une des revendications précédentes,
**caractérisé en ce que**
les éléments de guidage de matières (35, 36) sont reliés par une extrémité à la glissière de guidage (41, 42) respective et par l'autre extrémité au capot de projection (34), au moyen d'un guide à rainure (61).

5. Dispositif de distribution de matières pour moissonneuses-batteuses selon la revendication 4,
**caractérisé en ce que**
la liaison entre l'élément de guidage de matières (35a..f, 36a..f) respectif et la glissière de guidage (41, 42) respective est associée à la zone côté sortie de matières de l'élément de guidage de matières (35a..f, 36a..f) respectif.

6. Dispositif de distribution de matières pour moissonneuses-batteuses selon la revendication 4,
**caractérisé en ce que**
la liaison comportant un guide à rainure (61) entre l'élément de guidage de matières (35, 36) respectif et le capot de projection (34) est associée à la zone côté entrée de matières de l'élément de guidage de matières (35, 36) respectif.

7. Dispositif de distribution de matières pour moissonneuses-batteuses selon une des revendications précédentes,
**caractérisé en ce que**
la course de réglage (55) de la glissière de guidage (41) couplée aux éléments de guidage de matières (35a..c, 36a..c) situés côté intérieur est plus courte que la course de réglage (56) de la glissière de guidage (42) supplémentaire, au nombre d'au moins une, couplée aux éléments de guidage de matières (35d..f, 36d..f) situés côté extérieur.

8. Dispositif de distribution de matières pour moissonneuses-batteuses selon la revendication 7,
**caractérisé en ce que**
la course de réglage (55) plus courte de la première glissière de guidage (41) a pour effet un rayon de courbure (R1) plus faible des éléments de guidage de matières (35a..c, 36a..c) reliés à cette glissière de guidage (41), et la course de réglage (56) plus longue (56) de la glissière de guidage (42) supplémentaire a pour effet un rayon de courbure (R2) plus grand des éléments de guidage de matières (35d..f, 36d..f) reliés à la glissière de guidage (42) supplémentaire.

9. Dispositif de distribution de matières pour moissonneuses-batteuses selon une des revendications 7 ou 8,
**caractérisé en ce que**
la course de réglage (55, 56) respective est limitée par un guide à trou oblong (57) réalisé dans la glissière de guidage (41, 42) respective, chaque guide à trou oblong (57) correspondant à des trous oblongs (58) dans le capot de projection (34), et les guides à trous oblongs (57) ainsi que les trous oblongs (58) correspondants s'étendant de manière à peu près parallèle les uns aux autres.

10. Dispositif de distribution de matières pour moissonneuses-batteuses selon une des revendications précédentes,
**caractérisé en ce que**
les glissières de guidage (41, 42) d'un groupe (38, 39) d'éléments de guidage de matières (35, 36) sont couplées entre elles de manière réglable par l'intermédiaire d'un organe d'accouplement (45), l'organe d'accouplement (45) étant monté avec possibilité de rotation dans le capot de projection (34), au moyen d'un axe de rotation (46).

11. Dispositif de distribution de matières pour moissonneuses-batteuses selon la revendication 10,
**caractérisé en ce que**
l'organe d'accouplement (45) accueille des guides à trou oblong (51, 52) et que chacune des glissières de guidage (41, 42) est guidée dans l'un des guides à trou oblong (51, 52).

12. Dispositif de distribution de matières pour moissonneuses-batteuses selon la revendication 11,
**caractérisé en ce que**
le guide à trou oblong (51) de la première glissière de guidage (41) est réalisé sous forme de trajectoire courbe et est positionné autour de l'axe de rotation (46) de l'organe d'accouplement (45) de manière à ce que cet axe de rotation produise la course de réglage (55) plus courte.

13. Dispositif de distribution de matières pour moissonneuses-batteuses selon la revendication 10,
**caractérisé en ce que**
le guide à trou oblong (52) de la glissière de guidage (42) supplémentaire est réalisé sous une forme linéaire et est positionné autour de l'axe de rotation (46) de l'organe d'accouplement (45) de manière à ce que cet axe de rotation produise la course de réglage (56) plus longue.

14. Dispositif de distribution de matières pour moissonneuses-batteuses selon une des revendications 10 à 13,
**caractérisé en ce que**
une modification de la position de l'organe d'accouplement (45) a pour effet de modifier les courses de réglage (55, 56), la modification de la position de l'organe d'accouplement (45) étant obtenue par voie manuelle ou mécanique.

15. Dispositif de distribution de matières pour moissonneuses-batteuses selon la revendication 14,
**caractérisé en ce que**
la modification mécanique de la position de l'organe d'accouplement (45) s'effectue au moyen d'un vérin de réglage (49).

16. Dispositif de distribution de matières pour moissonneuses-batteuses selon la revendication 14,
**caractérisé en ce que**
l'activation du vérin de réglage (49) s'effectue en fonction de paramètres de machines et/ou de produits récoltés et/ou d'environnement.

17. Dispositif de distribution de matières pour moissonneuses-batteuses selon la revendication 15,
**caractérisé en ce que**
un paramètre de machine peut être constitué de la largeur de la tête de récolte, et/ou un paramètre de produit récolté peut être le type de produit ou l'humidité du produit et/ou un paramètre de l'environnement, un vent latéral détecté et/ou une inclinaison de la moissonneuse-batteuse (2).
